# EUROPÄISCHE PATENTSCHRIFT

(11) **EP 2 846 149 B1**
(45) Veröffentlichungstag und Bekanntmachung des Hinweises auf die Patenterteilung: **12.05.2021**
(21) Anmeldenummer: 14181808.8
(22) Anmeldetag: 21.08.2014
(51) Int. Cl.: G01N 21/27

(54) **NIR-Kalibrierstandard zur spektralen und lumineszenzquantenoptischen Kalibrierung einer optischen Messvorrichtung im NIR-Bereich umfassend 800 bis 1300 nm**
NIR calibration standard for spectral and luminescence quantum optical calibration of an optical measuring device in the NIR range comprising 800 to 1300 nm
Norme de calibrage NIR pour le calibrage spectral et optique quantique à luminescence d'un dispositif de mesure optique dans une plage NIR comprise entre 800 et 1300 nm

(30) Priorität: 06.09.2013 DE 102013109789
(43) Veröffentlichungstag der Anmeldung: 11.03.2015
(73) Patentinhaber: Bundesrepublik Deutschland, vertreten durch das Bundesministerium für Wirtschaft und Technologie, 12205 Berlin (DE)
(72) Erfinder: Würth, Christian, 10245 Berlin (DE); Behnke, Thomas, 13349 Berlin (DE); Hoffmann, Katrin, 12524 Berlin (DE); Resch-Genger, Ute, 12203 Berlin (DE)
(74) Vertreter: Zimmermann & Partner Patentanwälte mbB

(56) Entgegenhaltungen:
- DE-A1-102008 040 513
- US-A1- 2010 243 876
- SERGEY M. BORISOV ET AL: "New Life of Ancient Pigments: Application in High-Performance Optical Sensing Materials", ANALYTICAL CHEMISTRY, Bd. 85, Nr. 19, 4. September 2013 (2013-09-04), Seiten 9371-9377, XP55159058, ISSN: 0003-2700, DOI: 10.1021/ac402275g

## Beschreibung

Die Erfindung betrifft die Verwendung einer Klasse von anorganischen Pigmenten/Materialien als Lumineszenzstandard, spektraler Fluoreszenzstandard, Quantenausbeute-Standard, Lumineszenzintensitäts-Standard im Infrarotspektralbereich zwischen 800 nm und 1300 nm und dessen optionale Kombination mit anderen fluoreszierenden Substanzen. S.M. Borisov et al. (2013) beschreiben in Analytical Chemistry, 85:9371-9377 spektrale Eigenschaften von antiken Pigmenten und deren Potential für die optische Messung von pH, pCO₂ sowie zur Temperaturmessung. In DE 10 2008 040 513 A1 wird die Verwendung einer langwellig emittierenden Cyaninverbindung als NIR-Fluoreszenzstandard und ein Kit zur Kalibrierung von Photolumineszenzmesssystemen offenbart.

Insbesondere betrifft die Erfindung einen Kalibrierstandard, hergestellt unter Verwendung von Kupfersilikaten der Elemente der zweiten Hauptgruppe des Periodensystems der Elemente, insbesondere von Ägyptisch Blau (CaCuSi₄O₁₀), Han Blau (BaCuSi₄O₁₀) und/oder Strontiumkupfersilikat (SrCuSi₄O₁₀). Die Verwendung des Kalibrierstandards wird vorgeschlagen als spektraler Fluoreszenzstandard bzw. Photolumineszenzstandard zur Ermittlung der relativen spektralen Empfindlichkeit von Photolumineszenzmesssystemen, zur Ermittlung der spektralen Langzeit-Geräteperformance, als Standard zur Bestimmung der Lumineszenzquantenausbeute in flüssigen und festen transparenten Matrices und in flüssigen und festen streuenden Systemen. Die Erfindung betrifft ferner einen mehrkomponentigen Kit zur rückführbaren Kalibrierung eines Photolumineszenzmesssystems, umfassend einen Kalibrierstandard der Calcium-, Barium-, Strontium-Kupfersilikat und/oder ein weiteres Kupfersilikat eines Elements der zweiten Hauptgruppe enthält.

Die als Kalibrierstandard in Frage kommenden Pigmente sind der allgemeinen Summenformel

MCuSi₄O₁₀ (I)

mit M = Be, Mg, Ca, Sr oder Ba zuzuordnen.

Ägyptisch Blau und Han Blau sind seit alters her bekannt. Im bezeichneten Spektralbereich wurden optische Messsysteme bisher mit physikalischen Transfernormalen, d.h. mit Lampen kalibriert. Chemische Transfernormale für den Spektralbereich von 900 bis 1300 nm mit Quantenausbeuten > 1% sind nicht bekannt. Aus der Beschränkung auf physikalische Transfernormale ergeben sich Nachteile für die Anwendbarkeit der Kalibrierverfahren in praktisch relevanten Messsituationen, beispielsweise in der Biomedizin. Für spezielle Anwendungen häufig bevorzugte chemische Transfernormale, d.h. als Kalibrierstandard im bezeichneten Wellenlängenbereich geeignete Indikatorsubstanzen, - Partikel oder -Substrate, sind bisher nicht verfügbar.

Vor diesem Hintergrund wird ein spektraler Nahinfrarot-Kalibrierstandard gemäß Anspruch 1, die Verwendung eines solchen gemäß Anspruch 5 und ein Kit zur rückführbaren Kalibrierung eines Photolumineszenzmesssystems gemäß Anspruch 12 vorgeschlagen. Weitere Ausführungsformen, Modifikationen und Verbesserungen ergeben sich anhand der folgenden Beschreibung und der beigefügten Ansprüche.

Gemäß einer ersten Ausführungsform wird ein spektraler Nahinfrarot-Kalibrierstandard zur Kalibrierung einer optischen Messvorrichtung ausgewählt unter einem Fluoreszenzmikroskop, einem Laserscanning-Mikroskop, einem Durchflusszytometer und einem Mikroplatten-Reader hinsichtlich einer spektralen Empfindlichkeit und/oder einer Fluoreszenzquantenausbeute in einem Spektralbereich umfassend Nahinfrarot von 800 bis 1300 nm vorgeschlagen, wobei der Kalibrierstandard eine Verbindung gemäß der allgemeinen Formel 2- MCuSi₄O₁₀ umfasst, wobei M für Be, Mg, Ca, Sr, oder Ba steht und wobei der spektrale Nahinfrarot-Kalibrierstandard ein sphärisch geformtes Feststoff-Nanopartikel oder ein sphärisch geformtes Feststoff-Mikropartikel jeweils gebildet durch die Verbindung gemäß der obigen allgemeinen Formel+und eine Matrix umfasst, und die Verbindung nach der obigen allgemeinen Formel entweder im Inneren der Matrix konzentriert vorliegt, eine geschlossene Schicht auf einer sphärischen Oberfläche der Matrix bildet, oder eine geschlossene Schicht bildet, die unter der sphärischen Oberfläche des Partikels liegt, wobei die Matrix ausgewählt ist unter: einem Polydimethylsiloxan, einem Polystyrol, einem Polymethylmethacrylat, einem Polyacrylamid, einem Polylactid, einem Polyisopren, einem Polyacrylnitril, einem Polyester, Silica, einem Silikon, und einem Sol-Gel-Netzwerk.

Vorteile dieser Ausführungsform bestehen in der ausgezeichneten Photostabilität, der leichten Zugänglichkeit bei geringen Herstellungskosten und vor allem der für das bezeichnete Anwendungsgebiet geradezu idealen Form einander nur wenig überlappender Anregungs- und Emissionsbanden. Besonders vorteilhaft ist die hohe Fluoreszenzquantenausbeute dieses Kalibrierstandards und die Lage des Emissionsspektrums jenseits von 900 nm.

Weitere Vorteile ergeben sich aus der Einsetzbarkeit des Kalibrierstandards und insbesondere aus der Dotierung von Partikeln mit Durchmessern im Bereich von Nanometern bis Mikrometern, der Möglichkeit des Formulierens des Kalibrierstandards als Dispersion oder Emulsion zur Kalibrierung von Durchflusssystemen oder zur Herstellung einer Kalibrierfläche vorgegebener Rauheit mit eindeutig festlegbaren Streueigenschaften

Gemäß einer weiteren Ausführungsform wird ein spektraler Nahinfrarot-Kalibrierstandard vorgeschlagen, wobei der Nahinfrarot-Kalibrierstandard angepasst ist, um die optische Messvorrichtung hinsichtlich der Messung einer Lumineszenzquantenausbeute zu kalibrieren.

Die Anpassung umfasst insbesondere die äußere Form, Größe und Oberflächenbeschaffenheit des Kalibrierstandards. Vorteilhat ist er an die Probenaufnahme einer zu kalibrierenden optischen Messvorrichtungen angepasst, weist mit >5%, oder > 10 % eine ausgesprochen hohe Quantenausbeute auf und ist stabil.

Beispielsweise ist der Nahinfrarot-Kalibrierstandard angepasst, um die optischen Messvorrichtung hinsichtlich einer spektralen Langzeit-Geräteperformance zu kalibrieren und/oder zu überprüfen.

Fluoreszenzoptische Messverfahren bilden die Grundlage zahlreicher Nachweisverfahren und Untersuchungstechniken mit hoher Empfindlichkeit und haben deshalb neben Anwendungen in der Forschung Eingang in zahlreiche Routineanwendungen gefunden. Die dezentrale Verteilung von Messplätzen, Analyselaboren und Untersuchungsstellen macht eine turnusmäßige Überprüfung und/oder Kalibrierung der für optische Nachweisverfahren genutzten Messtechnik und dabei angewendeter Analysemethoden erforderlich. Der beschriebene Kalibrierstandard ist vor dem Hintergrund der zunehmenden Erschließung des NIR-Spektralbereichs für besagte Anwendungen bedeutsam. Verschiedene, im NIR emittierende Pigmente sowie Halbleitermaterialien wie Halbleiterquantenpunkte und -stäbchen und Kohlenstoffnanoröhren und Lanthanid-Materialien finden Anwendung in der Sicherheitstechnik oder werden als Bestandteile von Konvertermaterialien, -Folien und -Filmen genutzt oder in der Solarenergieforschung und Photovoltaik oder in der medizinischen Diagnostik verwendet. Die zur Charakterisierung dieser Materialien verwendeten optischen Messsysteme müssen verlässlich kalibriert werden können. Diese Aufgabe erfüllt der vorgeschlagene Standard, entweder allein, oder wie noch ausgeführt, in Kombination mit weiteren Substanzen zur Abdeckung eines noch breiteren Spektralbereiches.

Gemäß einer weiteren Ausführungsform wird ein spektraler Nahinfrarot-Kalibrierstandard vorgeschlagen, wobei der Nahinfrarot-Kalibrierstandard angepasst ist, um eine optische Messvorrichtung hinsichtlich einer relativen spektralen Empfindlichkeit zu kalibrieren und/oder zu überprüfen.

Verständlicherweise können empfindliche optische Messgeräte während des Gebrauchs dejustiert oder beschädigt werden. Der bereitgestellte Kalibrierstandard ermöglicht eine zuverlässige Kalibrierung unterschiedlichster Lumineszenzmesstechnik hinsichtlich spektraler Empfindlichkeit, insbesondere im Bereich von 800 bis 1300 nm.

Gemäß einer weiteren Ausführungsform umfasst die Matrix weiterhin einen organischen Farbstoff, der ausgewählt ist unter: Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, Styryl-Farbstoffen, oder 1,3,4-Oxadiazolderivaten.

Die regelmäßige sphärische Form der Partikel hat den Vorteil standardisierbarer Lichtstreu-Eigenschaften.

Gemäß einer weiteren Ausführungsform wird die Verwendung des beschriebenen Nahinfrarot-Kalibrierstandards zur Ermittlung einer Emissions- und/oder Anregungskorrekturfunktion vorgeschlagen, die gerätespezifische spektrale Beiträge eines zu kalibrierenden Photolumineszenzmesssystems enthält.

Vorteile dieser Ausführungsform ergeben sich daraus, dass bei Kenntnis der gerätespezifischen Parameter unterschiedlichste Geräte mit ein und demselben Standard kalibriert werden können. Die mit den unterschiedlichen Geräten erhobenen qualitativen und quantitativen Befunde sind somit rückführbar.

Gemäß einer weiteren Ausführungsform wird die Verwendung des beschriebenen Nahinfrarot-Kalibrierstandards gemeinsam mit einem weiteren spektralen Fluoreszenzstandard vorgeschlagen, wobei das Fluoreszenzspektrum dieses weiteren mit dem der gewählten Verbindung gemäß Formel (I) zusammen einen vorbestimmbaren Spektralbereich abdeckt, der an den Nahinfrarot-Spektralbereich von 800 bis 1300 nm anschließt oder mit jenem zumindest bei ca. 800 nm bis 870 nm überlappt oder zumindest bei ca. 1050 nm bis 1250 nm überlappt.

Dabei sollen mit den angegebenen ca.-Werten Abweichung um ± 50 nm umfasst sein. Vorteile dieser Ausführungsform ergeben sich in der Erweiterung des Spektralbereichs, in dem das jeweilige Gerät kalibriert werden kann.

Gemäß einer weiteren Ausführungsform wird die Verwendung des beschriebenen Kalibrierstandards gemeinsam mit einem spektralen Fluoreszenzstandard vorgeschlagen, der ausgewählt ist unter einem organischen Farbstoff, einem Seltenerd- oder Übergangsmetallionen-dotierten Glas oder einem ein solches Glas umfassendem Partikel, und/oder einem breitbandig emittierenden Leuchtstoff und/oder Pigment.

Vorteile dieser Ausführungsform ergeben sich aus dem erweiterten Kalibrierbereich. Da beispielsweise bereits gute Erfahrungen mit Kombinationen organischer Farbstoffe zur Kalibrierung vorliegen, kann die Ergänzung des vorgeschlagenen NIR-Kalibrierstandards mit diesen organischen Farbstoffen und den weiteren Fluoreszenzstandard-Substanzen dessen Anwendbarkeit erheblich steigern.

Gemäß einer weiteren Ausführungsform wird eine Kombination mit dem NIR-Kalibrierstandard eingesetzte spektrale Fluoreszenzstandard so gestaltet, dass der organische Farbstoff - wenn ein organischer Farbstoff als spektraler Fluoreszenzstandard dient - ausgewählt ist unter: Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, Styryl-Farbstoffen, oder 1,3,4-Oxadiazolderivaten; das Seltenerd- oder Übergangsmetallionen-dotierte Glas - wenn ein solches als der spektrale Fluoreszenzstandard dient - ausgewählt ist unter: einem Eu(III)-Komplex, einem lumineszenten Seltenerdmetall, ausgewählt unter Scandium, Yttrium, Lanthan sowie Lanthanoiden, insbesondere Cer (Ce), Europium (Eu), Terbium (Tb), Thulium (Tm), Erbium (Er), Samarium (Sm) und Holmium (Ho) oder breitbandig emittierenden Übergangsmetallionen wie Chrom (Cr), Vanadium (V), oder Mangan und ihren Verbindungen wie z.B. Oxiden; und/oder der breitbandig emittierende Leuchtstoff und/oder das Pigment - werden solche als ein weiterer spektraler Fluoreszenzstandard eingesetzt - ausgewählt ist unter YAG:Ce und Eu(III)-Verbindungen.

Vorteile ergeben sich aus den dem Fachmann bekannten besonderen spektralen Charakteristika dieser Verbindungen, insbesondere deren ausgeprägter Absorptions- und Emissionsbanden, die vorteilhaft geringfügig überlappen um Reabsorptionseffekte zu minimieren.

Gemäß weiteren Ausführungsformen wird die Verwendung des Nahinfrarot-Kalibrierstandard in Kombination mit weiteren untereinander abgestimmten spektralen Fluoreszenzstandards vorgeschlagen, wobei die Fluoreszenzspektren der Komponenten der weiteren Fluoreszenzstandards zusammen einen vorbestimmten Spektralbereich abdecken, der an den Nahinfrarot-Spektralbereich anschließt oder mit diesem zumindest teilweise überlappt.

Die Vorteile dieser Ausführungsform zur Kalibrierung eines erweiterten Spektralbereichs, idealerweise von UV/vis bis NIR, liegen auf der Hand: der mit dem vorgeschlagenen NIR-Kalibrierstandard abdeckbare NIR-Bereich wird vom Spektralbereich des UV/Vis Lichts in Richtung des NIR-Bereiches in Richtung des Spektrums sichtbaren Lichts und UV/vis erweitert. Eine optional umfasste Ausführungsform betrifft die weitere Ausdehnung des vom Kalibrierstandard abgedeckten Spektralbereichs von 1200 oder 1300 nm bis weit darüber hinaus, z.B. durch Kombination mit oberhalb von 1300 nm emittierenden Quantenpunkten oder Quantenpunkten vergleichbaren Strukturen, wie z.B. -Stäbchen.

Gemäß einer weiteren Ausführungsform wird vorgeschlagen, den Nahinfrarot-Kalibrierstandard als Fluoreszenzquantenausbeutestandard mit einer Fluoreszenzquantenausbeute von > 5%, insbesondere für die Kalibrierung einer Ulbrichtkugel-Messanordnung zu verwenden.

Im NIR-Spektralbereich von etwa 900 nm bis 1300 nm sind keine kommerziell verfügbaren Kalibrierstandards oder sich für eine derartige Verwendung eignende Materialien bekannt. Die Integrationsmessung mittels Ulbrichtkugelmessaufbau unter ausschließlicher Verwendung solcher Standards, wie beispielsweise von Lampen, erfordert umfangreiche Anpassungsmaßnahmen, die die Messung unnötig komplizieren. Die erstmals als Kalibrierstandard eingesetzten Kupfersilikate der Elemente der zweiten Hauptgruppe ermöglichen gemäß hier beschriebener Ausführungsformen die erleichterte Messung und exakte Einstellung technischer Eigenschaften von Materialien unterschiedlichster Zusammensetzung.

Gemäß einer weiteren Ausführungsform wird die Verwendung des Kalibrierstandards in einer flüssigen oder festen lichtstreuenden Matrix, als streuender spektraler Fluoreszenzstandard und als Fluoreszenzquantenausbeutestandard zur Bestimmung der Fluoreszenzquantenausbeute von streuenden und fluoreszierenden Partikel-Systemen oder zur Bewertung von fluoreszenzoptischen Messverfahren und Messanordnungen vorgeschlagen.

Die große praktische Bedeutung fluoreszenzoptisch markierter Partikeln ist bekannt und wird nachfolgend noch erläutert. Vor diesem Hintergrund stellt die Einbeziehung der durch Streuung auftretenden Effekte eine wesentliche Bereicherung der möglichen Einsatzgebiete des vorgeschlagenen Kalibrierstandards dar. Da, beispielsweise, die Rauheit einer Oberfläche des Kalibrierstandards mit Hilfe der in der Keramiktechnologie etablierten Verfahren, bekannter Ver- und Bearbeitungsverfahren von Keramiken und Sintermaterialien gezielt eingestellt werden kann, oder auch über die Partikelgröße steuerbar ist, können standardisierte Referenzmaterialien zur Kalibrierung im NIR bereitgestellt werden.

Gemäß einer weiteren Ausführungsform wird ein Kit zur rückführbaren Kalibrierung eines Photolumineszenzmesssystems, insbesondere eines Fluoreszenzmesssystems vorgeschlagen, umfassend: - einen Nahinfrarot-Kalibrierstandard gemäß einem der Ansprüche 1 bis 4, sowie - ein spektral korrigiertes Fluoreszenzspektrum des Nahinfrarot-Kalibrierstandards in tabellarischer Form, in computerlesbarer Form und/oder eine Angabe einer Internetseite, auf welcher das korrigierte Fluoreszenzspektrum abrufbar ist.

Vorteile ergeben sich aus der universellen Verwendbarkeit eines derartigen Kits und ergeben sich insbesondere aus der Möglichkeit der Verfügbarkeit und/oder des dezentralen Zugriffs auf eine für alle Anwender identische Datensammlung.

Gemäß einer weiteren Ausführungsform umfasst das Kit eine Mehrzahl weiterer Photolumineszenzstandards, umfassend zumindest:
- einen organischen Farbstoff, der ausgewählt unter: Biphenyl oder Biphenylderivaten, Naphtalin oder Naphtalinderivaten, Cumarinderivaten, 3H-Phenoxazin-5-onderivaten, Merocyanin-derivaten, Hemicyaninderivaten, p-Terphenylen, Styryl-Farbstoffen, oder 1,3,4-Oxadiazol-derivaten;
- einem Seltenerd- oder Übergangsmetallionen-dotierte Glas, das ausgewählt ist unter einem Eu(III)-Komplex, einem lumineszenten Seltenerdmetall, ausgewählt unter: Scandium, Yttrium, Lanthan sowie Lanthanoiden, insbesondere Cer (Ce), Europium (Eu), Terbium (Tb), Thulium (Tm), Erbium (Er), Samarium (Sm) und Holmium (Ho) oder breitbandig emittierenden Übergangsmetallionen wie Chrom (Cr), Vanadium (V), oder Mangan und ihren Verbindungen wie z.B. Oxiden; und/oder
- einem breitbandig emittierende Leuchtstoffen und/oder Pigment ausgewählt ist unter: YAG:Ce und Eu(III)-Verbindungen.

Vorteile eines solchen Kits ergeben sich aus der Möglichkeit ein Gerät je nach Bedarf in Hinsicht auf die jeweilige Anwendung im betreffenden Spektralbereich sowohl hinsichtlich spektraler Empfindlichkeit (Sensitivität), als auch hinsichtlich Fluoreszenzquantenausbeute kalibrieren bzw. eichen zu können.

Die beschriebenen Ausführungsformen sind insgesamt vorteilhaft für die Charakterisierung und Kalibrierung von optisch spektral auflösenden Messsystemen, insbesondere von Photolumineszenzmessgeräten geeignet und einsetzbar. Sie sind nicht nur für die Funktionsprüfung eines Messaufbaus, sondern insbesondere für den Abgleich unterschiedlicher Ulbrichtkugelmessplätze für die Quantenausbeutebestimmung geeignet. Damit schaffen sie eine Grundlage für die Rückführbarkeit von Messergebnissen in einem Einsatzgebiet der Fluoreszenzspektrometrie, das eine hohe praktische Relevanz in unterschiedlichen Gebieten wie der Biomedizin, den Materialwissenschaften oder der Sensorik und Prozessüberwachung besitzt.

Jede Lumineszenzmesstechnik liefert Messdaten, die sich aus analytspezifischen und (unerwünschten) gerätespezifischen Beiträgen zusammensetzen. Letztere spiegeln die Wellenlängenabhängigkeit der im Anregungs- und Emissionskanal des Gerätes enthaltenen Lichtquelle(n) und optischen Bauelemente wider sowie die spektrale Empfindlichkeit der eingesetzten Detektionssysteme. Die Vergleichbarkeit von Lumineszenzdaten über Geräte- und Laborgrenzen hinaus, die Erfassung der Gerätealterung, die Rückführbarkeit von Lumineszenzdaten (gemäß EN ISO/IEC 17025) und die Optimierung von Lumineszenzmessmethoden erfordern die Ermittlung dieser gerätespezifischen Effekte. Dies gilt auch für Messmethoden, welche die Emission von Luminophoren mit spektral unterschiedlichen Emissionsspektren vergleichen wie z. B. die Bestimmung von Fluoreszenzquantenausbeuten und für Emissionsmessungen bei verschiedenen Anregungswellenlängen. Die Erfassung dieser gerätespezifischen Effekte erfolgt durch die Ermittlung sogenannter Emissions- und Anregungskorrekturfunktionen, welche die Wellenlängenabhängigkeit und Polarisationsabhängigkeit der spektrale Empfindlichkeit der eingesetzten Detektionskanäle (Emissionskorrektur) und die Wellenlängenabhängigkeit und Polarisationsabhängigkeit der spektralen Beleuchtungsstärke am Probenort bzw. der Anregungslichtintensität (Anregungskorrektur) beinhalten.

Die einfache und rückführbare Kalibrierung von Lumineszenzmesssystemen erfordert rückführbare und idealerweise zertifizierte Transferstandards, die unter identischen Bedingungen wie typische Proben vermessen werden können, die für möglichst viele verschiedene Gerätetypen, Formate und Mess-Geometrien geeignet sind und die einen weiten Spektralbereich, typischerweise UV/vis, vis/NIR oder UV/vis/NIR, abdecken. Mit zunehmender Nutzung des NIR-Spektralbereiches für viele verschiedene Fluoreszenzapplikationen (z. B. optische Bildgebung; Thermographie, LED-Technik, Solarenergieforschung, Entwicklung neuer optischer oder opto-elektronischer Bauteile für die optischen Technologien, Telekommunikation) gewinnen Standards für den NIR-Spektralbereich stark an Bedeutung.

Der Begriff Rückführbarkeit beschreibt eine Eigenschaft von Messergebnissen im Bereich der Messtechnik und analytischen Chemie. Insbesondere ist ein rückführbarer Messwert durch eine ununterbrochene Kette von Vergleichsmessungen bekannter Messunsicherheit auf ein anerkanntes Normal bezogen. Bei jeder dieser Vergleichsmessungen wurde eine Kalibrierung so durchgeführt, dass die Messung durch einen höherwertigen Standard bestimmt wurde. Es gibt also eine Kalibrierhierarchie.

Die Rückführung ist durch mehrere wesentliche Elemente gekennzeichnet:
- eine ununterbrochene Kette von Vergleichen, die auf einen anerkannten Standard zurückgeht, gewöhnlich zertifiziertes Referenzmaterial;
- Eine definierte Messunsicherheit: die Messunsicherheit ist für jeden Schritt berechnet und angegeben, so dass die Gesamtunsicherheit berechnet werden kann;
- Dokumentation: jeder Schritt (incl. Ergebnis) ist nach allgemein anerkannten Verfahren durchgeführt worden;
- Kompetenz: Die Laboratorien, die den Prozess durchführen, müssen hierfür kompetent sein, was z. B. durch ihre Akkreditierung bestätigt sein kann;
- Nachkalibrierungen; Kalibrierungen müssen regelmäßig wiederholt werden.

Mit Farbstoff beladene Partikel eines mittleren Durchmessers im Nanometer- und Mikrometerbereich sind von großer Bedeutung für die Charakterisierung optischer Messtechnik, insbesondere von Fluoreszenzmikroskopen, Laserscanning-Mikroskopen, Durchflusszytometern und Mikroplatten-Readern, insbesondere für die Kalibrierung derartiger Geräte hinsichtlich spektraler Empfindlichkeit und Fluoreszenzquantenausbeute, da farbstoffcodierte Partikel für die spezifische Markierung von Molekülen, Organellen, Zellen und Geweben, sowie als Plattform verschiedener partikelbasierter Assays von unmittelbar praktischer Bedeutung sind. Die hier beispielhaft beschriebenen Substanzen Ägyptisch Blau, Han-Blau und Strontiumkupfersilikat sowie die weiteren Kupfersilikate der Elemente der zweiten Hauptgruppe und die anderen, beispielhaft aufgeführten anorganischen Substanzen erfüllen auf Grund ihrer hohen Stabilität und dem sich daraus ergebenden inerten Verhalten die Anforderungen für die vorstehend beschriebenen Anwendungen. Ihre Fluoreszenzeigenschaften weisen unter den üblichen Messbedingungen im Bereich der Raumtemperatur von ca. 15-50 °C eine geringe Temperaturabhängigkeit auf. Damit kommen sie als Bestandteile einer breitbandigen, auf einer Kombination verschiedener, möglichst breitbandig emittierenden chemischen Chromophoren aufgebauten "Chromophor-basierten Kalibrierlichtquelle" bzw. Weißlichtquelle, sowie in diesem Zusammenhang auch als Anregungslichtquelle für andere Chromophore und als partikuläre Kalibriersysteme zur Kalibrierung entsprechender optischer Messtechnik wie Fluoreszenzmikroskope, Mikrotiterplatten-Reader, Durchflusszytometer, und anderer fluoreszenzoptischer Messaufbauten für die Analytik, Bioanalytik und Medizin in Betracht und können für die rückführbare Kalibrierung derartiger Messsysteme genutzt werden.

Erfindungsgemäß umfasst der Kalibrierstandard ein sphärisch geformtes Feststoff-Nanopartikel oder ein sphärisch geformtes Feststoff-Mikropartikel jeweils gebildet aus dem Pigment gemäß der allgemeinen Formel (I) und einer Matrix.

Bei der Erzeugung von siliziumhaltigen Partikeln, insbesondere von Silikat-Partikeln, oder Polymerpartikeln nach bekannten Verfahren können die hier genannten Pigmente auf Grund ihrer chemischen Zusammensetzung in Form eines Kerns oder in Form einer Schicht in eine das Partikel umfassende Matrix eingebettet werden. Dabei kann die Matrix einen weiteren oder mehrere weitere Chromophore organischen oder anorganischen Ursprungs umfassen, die beispielsweise in einem anderen Wellenlängenbereich absorbiert und/oder in einem anderen Wellenlängenbereich emittiert, als das jeweilige Pigment (Kupfersilikat eines Elementes der zweiten Hauptgruppe) selbst. Damit kann z.B. der für Gerätekalibrierungen nutzbare Spektralbereich des vorgeschlagenen partikulären Kalibrierstandardserweitert werden.

Beispiele derartiger weiterer Standardsubstanzen sind die Kit-Farbstoffe F001-F005 und F006 eines von der Bundesanstalt für Materialforschung und -prüfung (BAM) und der Physikalisch-Technischen Bundesanstalt (PTB) entwickelten Standards, wobei F001 ein Biphenylderivat, F002 ein Naphthalin-Derivat, F003 und F004 unterschiedliche Coumarine, F005 ein 3H-Phenoxazin-5-onderivat und F006 der Farbstoff Styryl 9M bzw. LDS 765 oder Styryl 8, bzw. LDS 751 ist. Weitere Standardsubstanzen, die mit einer Verbindungen gemäß Formel (I) zu einem Kalibrierstandard mit erweitertem Spektralbereich kombiniert werden können sind NIR-emissive Cyanine, die als Lösungen oder eingebaut in nm- oder µm-große Partikel oder andere feste Matrices vorliegen können, sowie Seltenerd- und Übergangsmetallionen-dotierten Gläser und/oder daraus durch Mahlen hergestellte nm- oder µm-große Partikel. Weitere Beispiele für mögliche Kombinationen sind in US 7,919,744 B2 benannt. Ebenso können andere kürzerwellig absorbierende und emittierende Leuchtstoffe, wie beispielsweise YAG:Cer (mit Cer dotierter Yttrium-Aluminium-Granat / Y₃Al₂Al₃O₁₂) oder rote Emitter wie Eu(III)-basierte Leuchtstoffe, in verschiedenen Partikelgrößen und eingebaut in verschiedenen Matrices (beispielsweise Schichtsilikate, Laponite, Granate, Gläser, Keramiken etc.; eingebaut in andere größere Partikel) mit einem Pigment gemäß Formel (I) kombiniert und vorteilhaft zur Kalibrierung optischer Messgeräte eingesetzt werden.

Entsprechende Vorteile betreffen die Erweiterung des kalibrierfähigen Spektralbereichs. Weitere Vorteile ergeben sich aus der weiten Verbreitung fluoreszenzoptischer Mess- und Analysesysteme für unterschiedlichste Anwendungen in der Forschung und Produktion, in so unterschiedlichen Bereichen wie der Lebensmitteltechnologie, der Rückstandsanalytik und Toxikologie, der Biochemie, Immunologie, biomedizinischen Bildgebung oder Biotechnologie.

Gemäß einer weiteren Ausführungsform wird ein Kit zur rückführbaren Kalibrierung eines Photolumineszenzmesssystems vorgeschlagen, insbesondere eines Fluoreszenzmesssystems, umfassend einen Photolumineszenzstandard gemäß Formel (I), sowie ein spektral korrigiertes Fluoreszenzspektrum des Photolumineszenzstandards in tabellarischer Form, in computerlesbarer Form und/oder eine Angabe einer Internetseite, auf welcher das korrigierte Fluoreszenzspektrum abrufbar ist.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Figur 1 zeigt korrigierte normierte Emissionsspektren der verschiedenen Pigmente (vgl. Farbkodierung aus Fig. 1); die Erstellung der für die spektrale Korrektur verwendeten Korrekturkurve erfolgte mittels eines Strahldichtestandards (kalibrierte spektrale Strahldichte).

Figur 2 zeigt schematisch Möglichkeiten des Aufbaus eines Kalibrierstandards als Nano- oder Mikropartikel umfassend eines der Pigmente nach Formel (I).

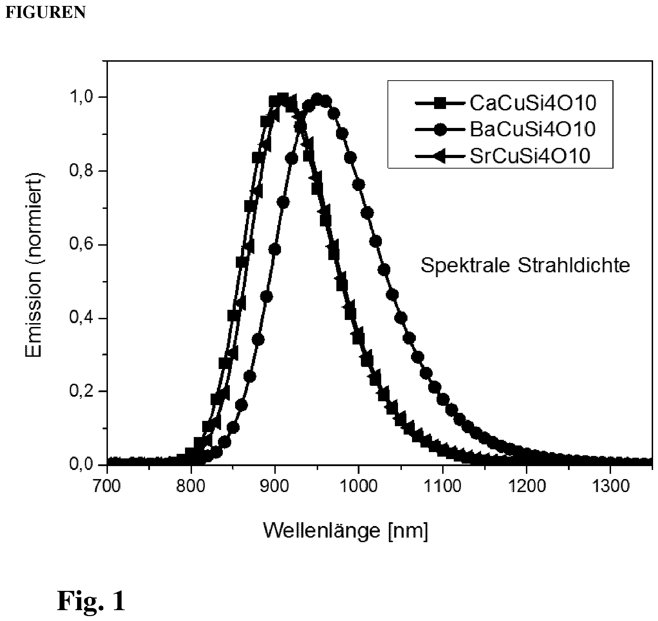

Insbesondere zeigt Figur 1 die Emissionsspektren der drei Pigmente nach Formel I. Die Farbstoffe weisen im Bereich von 500 bis 800 nm eine ausgeprägte breitbandige Absorption auf. Alle Farbstoffe emittieren im NIR oberhalb von 800 nm. Ähnlich zur NIR Anregung, ist die Emission mit bathochromen Verschiebungen ²B_{2g} → ²B_{1g} des Calcium- zu Bariumkupfersilikaten mit entsprechenden Maxima bei 909, 914 und 948 nm für die Calcium-, Strontium- und Bariumkupfersilikate verbunden. Die genaue Bestimmung der Lumineszenzquantenausbeute im NIR-Bereich ist mit einem Spektrofluorometer in 0°/90° oder mit stirnseitiger Messgeometrie auf Grund der von der Partikelgröße abhängigen Streuung unmöglich und erfordert deshalb eine Ulbrichtkugel-Messanordnung. Untersuchungen anderer Autoren lassen eine Lumineszenzquantenausbeute von etwa 10.5 % für Ägyptisch Blau erwarten [4].

Gemäß einem praktischen Ausführungsbeispiel wurde Strontiumkupfersilikat (SrCuSi₄O₁₀) mittels Festphasenreaktion aus Siliziumdioxid, Strontiumkarbonat und basischem Kupferkarbonat erhalten: Die Ausgangsstoffe wurden im stöchiometrischen Verhältnis gemischt, gründlich im Achatmörser homogenisiert und bei 1000 °C während 24 h gesintert. Der erhaltene Sinterkörper wurde erneut im Achatmörser homogenisiert. Mittels Kugelmühle wurde das Rohmaterial weiter bis zu einer mittleren Partikelgröße im Bereich von 10 nm bis 5 µm homogenisiert. Proben des Ägyptisch-Blau (CaCuS₁₄O₁₀) und des Han-Blau (BaCuSi₄O₁₀) können analog unter Verwendung der entsprechenden Karbonate erhalten werden, sind aber auch kommerziell verfügbar, beispielsweise von der Fa. Kremer Pigmente (Aichstetten, Deutschland). Zur Verbesserung der Rieselfähigkeit der Pulver können die Partikeln hydrophobiert, beispielsweise silanisiert werden. Dazu werden beispielsweise 1,6 g der Ägyptisch Blau Partikel in 5 ml wasserfreiem THF mit 0,5 ml Trimethylsilylchlorid aufgeschlämmt. Die Dispersion wird für 30 Minuten gerührt und anschließend zentrifugiert und mehrmals mit Aceton gewaschen. Anschließend wird das gewaschene Sediment lyophilisiert und über einem Trockenmittel gelagert.

Die gezeigten Emissionsspektren sind spektral korrigiert für die wellenlängen- und polarisationsabhängige spektrale Empfindlichkeit des Emissionskanals des verwendeten Messsystems (Spektrometer FSP 920 von Edinburgh Instruments; als Bezugsgröße der Kalibrierung: spektrale Strahldichte bzw. spektrale Radianzskala) [1, 2] zu Grunde liegen. Lumineszenz-Anregungs- und Emissionsspektren wurden mit einem Spektrometer FSP 920 von Edinburgh Instruments aufgenommen, das mit drei verschiedenen Detektoren ausgestattet ist.

Weiterhin kann die Verbindung nach Formel (I) vorteilhaft als spektraler Standard zur Überprüfung der spektralen Geräteperformance und/oder der Langzeitstabilität der spektralen Gerätecharakteristika eines Lumineszenzmesssystems für den NIR-Spektralbereich eingesetzt werden sowie zur regelmäßigen Überprüfung der spektralen Sensitivität. Die regelmäßige Überprüfung der Performance eines Lumineszenzmesssystems ist notwendig, um beispielsweise die durch die Alterung von optischen und optisch-elektronischen Bauteilen bedingte Gerätedrift zu erfassen und eine Vergleichbarkeit der an verschiedenen Tagen durchgeführten Messungen von relativen Fluoreszenzintensitäten zu ermöglichen. Die Verfügbarkeit solcher Standards ist außerdem unerlässlich für die im Rahmen von Laborakkreditierungen nach ISO 17025 notwendige regelmäßige Durchführung von Geräteüberprüfungen.

Es ist erfindungsgemäß vorgesehen, Substanzen nach Formel (I) als Oberflächenmarkierung oder eingekapselte Dotierung von sphärisch geformten Partikeln mit einem mittleren Partikeldurchmesser im Bereich von Nanometern bis Mikrometern als Kalibrierstandard im NIR zu verwenden, wobei die Partikeln Durchmesser zwischen ca. 10 nm und 1000 µm haben. Vorteilhaft kann die Matrix eines solchen Partikels weiterhin einen organischen Farbstoff umfassen. Die Verwendung des Kalibrierstandards wird zusätzlich erleichtert und seine unmittelbare Anwendbarkeit, beispielsweise für automatische Partikelmesssysteme wie Partikel-Zähler und Analyseautomaten, standardisierbar, wenn die Partikeln eine monodisperse Größenverteilung aufweisen.

Als Matrixmaterial zur Ausbildung der Partikel kommen insbesondere organische Polymere wie Polydimethylsiloxan, Polystyrole oder Polymethylmethacrylate, Polyacrylamide, Polylactide, Polyisopren, Polyacrylnitril und Polyester in Frage sowie anorganische Polymere wie Silica, Silikone und Sol-Gel-Netzwerke und anorganischorganische Hybridsysteme. Außerdem kann eine Kapselung über die Verwendung von Polyelektrolyten mittels Layer-by-Layer Technik erfolgen oder mittels Tensiden und Micellen- und Liposomenbildnern. Oberflächen-Dotierungen hingegen können durch Anbindung von Fluorophoren an Oberflächenfunktionalitäten der Partikel hergestellt werden, wobei sich für Applikationen als Fluoreszenzstandards und Kalibrierwerkzeuge breitbandig emittierende Farbstoffe anbieten, oder bevorzugt durch den Einbau solcher Farbstoffe in eine Oberflächenschicht, z.B. bestehend aus einem organischen Polymer, Tensid, Polyelektrolyten oder einem anorganischen Material wie Quarzglas (Silica). Vorteilhaft für die Applikation als Standards ist dabei die Einkapselung der Fluorophore als Schutz vor äußeren Einflüssen, wobei dann die verwendete Kapselungsmatrix ihre Fluoreszenzeigenschaften und insbesondere die vorteilhafte Form der Emissionsbande kontrolliert. Die entscheidende Größe ist hierbei i.a. die Polarität der Fluorophor-Umgebung. Bei einer ungekapselten Oberflächenmodifizierung mit Fluorophoren werden die optischen Eigenschaften der Fluorophore system- bzw. anwendungsspezifisch von der jeweiligen Mikroumgebung des Farbstoffs bestimmt.

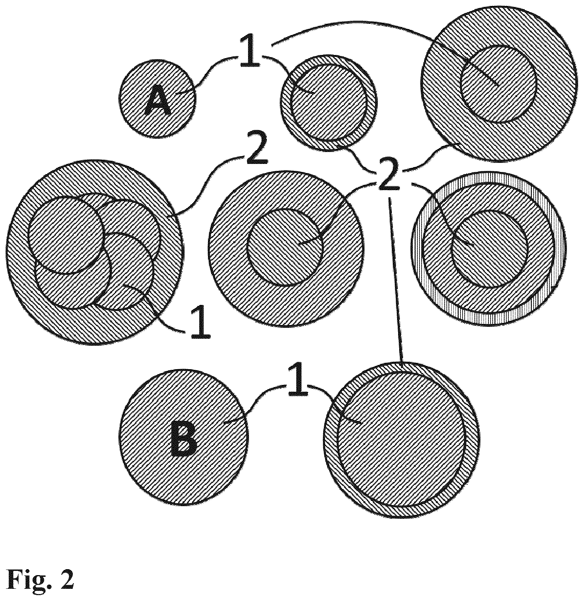

In Figur 2 ist schematisch der Aufbau des Kalibrierstandards in Form sphärischer Partikel dargestellt, die ein Pigment/material gemäß der Formel (I) umfassen. Insbesondere ist in der oberen Reihe der Fig. 2 der Aufbau von Nano- und von Mikropartikeln ausgehend von einem einzelnen Nanopartikel A umfassend eines der beschriebenen Pigmente/Materialien 1 gemäß Formel (I) gezeigt: Ein Nanopartikel kann chemisch oder physikochemisch mit einer weiteren Substanz 2 oder Pigment 2 modifiziert werden. Diese Substanz kann beispielsweise die Partikelmatrix bilden. So können Mikropartikel (rechts oben) gebildet werden, deren Kern ein Pigmentpartikel bildet. Ebenso können (vgl. mittlere Reihe, links) mehrere Nanopartikel in eine Matrix 2 eingebettet werden und im Ergebnis ein sphärisches Mikropartikel ausbilden, dessen Kern mehrere Nanopartikeln A der hier beschriebenen Pigmente 1 gemäß Formel I bilden. Ebenso kann ein einzelnes Nanopartikel eines anderen Pigments 2 oder einer anderen Substanz (beispielsweise ein der oben benannten Farbstoffe) mit einer Hülle, umfassend eines der hier bezeichneten Pigmente 1 gemäß Formel I versehen werden. Der Aufbau des neuen - hier sphärisch dargestellten - Partikels kann, beispielsweise durch Adsorption einer oder mehrerer Schichten erfolgen. Wie in der unteren Bildreihe schematisch gezeigt kann ein Mikropartikel B, umfassend zumindest eine der beschriebenen Substanzen 1 entsprechend Formel I ebenso mit einer Schicht, beispielsweise mit einer Polymerschicht, einer Schichtfolge oder einer Schicht eines weiteren Pigments überzogen oder chemisch modifizieret werden. Beispiele für einen schichtweisen Aufbau von Multischichten sind aus der LbL-Technik bekannt.

Gemäß bevorzugten Ausführungsformen werden aus, beispielsweise mittels Kugelmühle, homogenisierten Pigmentpartikeln sphärische Nano- oder Mikropartikel gewonnen. Dazu können die Nano- bzw. Mikrokristalle beispielsweise mittels Emulsionspolymerisation in eine Polymermatrix eingebettet werden. Sie erlangen dabei eine ideal sphärische Form. Ebenso können die Nano- oder Mikrokristallite mittels Pfropfpolymerisation ihre sphärische Form erlangen, indem sie beispielsweise zunächst mit einem ersten Polymercoating versehen und dann in einem geeigneten System, beispielsweise in einem Zwei-Phasen-System unter geeignetem Rühren, mit einer Polymermatrix sphärisch umhüllt werden. Durch die dem Fachmann bekannte Einstellung der Reaktionsbedingungen zur Polymerisation der Matrix, insbesondere der Art und Konzentration der Reaktionspartner, der Temperatur und unter Zusatz von geeigneten oberflächenaktiven Substanzen, können ideal sphärische Partikel erhalten werden.

Vorteilhafterweise sind die Absorptions- und Emissionsspektren der zur Einbettung oder Beschichtung verwendeten zweiten Substanz so angepasst, dass sie sich nur partiell mit dem Anregungs- bzw. Emissionsspektrum des betreffenden Pigments 1 überlappen. Das ermöglicht z.B. bei geschickt gewählter Fluorophor-Kombination und Anpassung einer eingesetzten Konzentration eines Farbstoffs oder einer anderen Matrixkomponente den Aufbau einer Chromophor-basierten breitbandig emittierenden Weisslichtquelle in verschiedenen Größen (nm- und µm-große Partikel etc.) und Dimensionen und Formate als chemischen Ersatz z.B. für eine klassische Kalibrierlampe, die dann z.B. auch in andere Systeme eingebaut werden kann.

Ein bedeutsamer Aspekt der vorliegenden Erfindung betrifft einen Kit zur rückführbaren Kalibrierung eines Photolumineszenzmesssystems umfassend die eingangs benannten Kupfersilikate, Bevorzugt sind dabei die Kombinationen zumindest eines der benannten Kupfersilikate mit:
(a) organischen Farbstoffen
   Die organischen Farbstoffe sind ausgewählt unter: Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, oder 1,3,4-Oxadiazolderivaten. Die organischen Farbstoffe sind dabei in verschieden großen Partikeln aus organischen und anorganischen Matrices, beispielsweise Schichtsilikaten wie Laponiten etc. eingebettet oder an diese gebunden. Ein entsprechendes Kit kann neben den Farbstoffen in partikelgebundener Form ebenso die organischen Farbstoffe in gelöster Form bekannter molarer Konzentration in einem jeweils geeigneten Lösungsmittel und damit in flüssiger Form umfassen. Ebenso können die Farbstoffe als Filme und Folien variabler Dicke, als Gele, Hydrogele und Partikel variabler Größe vorliegen.
(b) Seltenerd- oder Übergangsmetallionen-dotierten Gläsern
   Die Gläser umfassen insbesondere Übergangs- und Seltenerdmetallionenkomplexe, wie z.B. Eu(III)-Komplexe, sowie lumineszente Seltenerdmetalle, ausgewählt unter Scandium, Yttrium, Lanthan sowie Lanthanoiden (umfassend 14 Elemente der Ordnungszahl 58 bis 71), insbesondere Cer (Ce), Europium (Eu), Terbium (Tb), Thulium (Tm), Erbium (Er), Samarium (Sm), Holmium (Ho) oder Übergangsmetalle wie Chrom (Cr), Mangan (Mn) oder Vanadium (V). Diese Gläser können als Glasblöcke, -Stäbe, -scheiben, als Glasbeschichtungen, Glasschichten, als gemahlenes Glas, als Glaspartikel, als Granulat oder eingebettet, beispielsweise in einem Kunststoff ausgeführt sein oder als gedruckte, aufgeklebte oder gepresste Schicht vorliegen.
(c) anderen breitbandig emittierenden Leuchtstoffen und Pigmenten wie YAG:Ce, YAG:Eu und Eu(III)-Verbindungen oder Tb(III)-Verbindungen oder mit Quantenpunkten variierter Größe und Materialzusammensetzung wie PbS, PbSe oder CdHgTe, insbesondere im NIR-Spektralbereich (z.B. > 1200 nm).

Diese Leuchtstoffe können als Reinmaterial oder verdünnt mit einem nicht-fluoreszenten Zusatz wie z.B. Bariumsulfat, Teflon, Polymerpartikeln, auch mit unterschiedlichen Korngrößen des Leuchtstoffs, in Form eines Volumensystems, als Schichten, Filme und Folien variabler Dicke oder als gedruckte, aufgeklebte oder gepresste Schichten vorliegen.

Optional kann das Kit spektral korrigierte Fluoreszenzspektren der benannten Komponenten (a) bis (c) in tabellarischer Form, in computerlesbarer Form und/oder eine Angabe einer Internetseite umfassen, auf welcher die korrigierten Fluoreszenzspektren abrufbar sind. Ein solches Kit kann grundsätzlich eine Mehrzahl unterschiedlicher Emissionsstandards und deren spektral korrigierte Emissionsspektren zur Erstellung einer Gesamtkorrekturfunktion für den Emissionskanal (Emissionskorrekturfunktion) enthalten als auch eine Mehrzahl unterschiedlicher Anregungsstandards und deren korrigierte Anregungsspektren zur Erstellung einer Gesamtkorrekturfunktion für den Anregungskanal (Anregungskorrekturfunktion) umfassen.

Die hier als Kalibrierstandards vorgeschlagenen Kupfersilikate der zweiten Hauptgruppe erweitern die Anwendungsmöglichkeiten bekannter Emissions- und Anregungsstandards. Die erfindungsgemäßen Kalibriersubstanzen (Kupfersilikate der Elemente der zweiten Hauptgruppe) sowie das diesen enthaltende Kit ermöglicht es dem Benutzer, eine Kalibrierung des Messsystems im NIR-Spektralbereich, insbesondere zwischen 800 bis 1300 nm durchzuführen. Im Falle eines Kits, das eine Kombination des erfindungsgemäßen Farbstoffs mit weiteren abgestimmten Standards enthält, kann eine Emissionskorrektur über den gesamten UV/vis/NIR-Spektralbereich bis zur einer Wellenlänge von etwa 1300 nm zuverlässig und reproduzierbar durchgeführt werden und für nicht streuende Materialien auch eine Anregungskorrektur bis etwa 700 nm zuverlässig und reproduzierbar durchgeführt werden. Gegenüber bekannten Kombinationen wird somit der kalibrierbare Wellenlängenbereich in Richtung des NIR-Bereichs erweitert. Insbesondere ermöglicht die Abstimmung der einzelnen Fluoreszenzstandards die Erzeugung einer Gesamtkorrekturfunktion das Gerät, beispielsweise auch für Ulbrichtkugelmessanordnungen, in bislang nicht verfügbarer Qualität.

Bisher wurden in einem weitaus engeren Spektralbereich bis ca. 900 nm als Quantenausbeutestandard lediglich organische Substanzen und Metallionen-Ligand-Verbindungen wie Ru(II)-Komplexe und Seltenerd-Verbindungen eingesetzt. Beispielsweise sind entsprechende Cyanin-Farbstoffe nur über aufwendige Synthesen zugänglich und gerade im NIR-Spektralbereich oft wenig emissiv und wenig stabil. Ihre photochemische und thermische Stabilität ist oft zu gering). Im bezeichneten Spektralbereich wurden optische Messsysteme bisher ausschließlich mit physikalischen Transfernormalen, d.h. mit Lampen kalibriert. Für den bezeichneten Wellenlängenbereich existiert unserem Kenntnisstand nach keine Methode, die auf der Verwendung eines chemischen Transfernormals, d.h. einem Farbstoff bzw. Pigment, basiert. Ebenso sind keine Publikationen zu Materialien für die Quantenausbeutebestimmung zwischen 900 und 1300 nm mit Quantenausbeuten > 1% bekannt.

Ein entscheidender Nachteil bisher bekannter Lösungen der Kalibrierung eines Messaufbaus ausschließlich mit physikalischen Transfernormalen besteht darin, dass die Kalibrierung bei Intensitäten erfolgt, die typischerweise nicht an die Emissionsintensität jeweiliger lumineszenter Proben angepasst sind. Das erfordert aufwendige Vorrichtungen und Prozeduren, z.B. um die vorliegende Geometrie des Transfernormals an den aktuellen Messaufbau anzupassen. Bisher ist die Kalibrierung von spektralen Messsystemen im nahen infraroten Spektralbereich nur mit physikalischen Transfernormalen (Lampen) und aufwendigen Messverfahren möglich. Die hier vorgeschlagene Verbindung gemäß Formel I ermöglicht eine kostengünstige Kalibrierung bei einfacher mono- oder polychromatischer Anregung. Die Kalibrierung erfolgt mit Strahlungsintensitäten, die typischen Luminophoren entspricht. Ebenso kann die Kalibrierung z.B. in einer Schutzgasatmosphäre stattfinden.

Bei der Verwendung fluoreszenzoptischer Standards ist dem Fachmann typischerweise an einem geringen Einfluss äußerer Versuchsbedingungen, wie beispielsweise der Temperatur, auf die Fluoreszenzeigenschaften des Fluorophores gelegen. Deshalb werden solche Farbstoffe eingesetzt, die unter den gewählten Messbedingungen (Temperatur, Ionenstärke, Milieu) eine möglichst stabile Lumineszenz zeigen und deren Lumineszenz eine möglichst geringe Temperaturabhängigkeit aufweist. Weiterhin ist eine Beeinflussung der jeweils untersuchten Prozesse, etwa bei der Untersuchung biochemischer oder biomedizinischer Fragestellungen durch den Fluoreszenzstandard äußerst unerwünscht. Vor diesem Hintergrund bietet die hiermit vorgeschlagene Verwendung der stabilen, mithin reaktionsträgen und nicht-toxischen anorganischen Pigmente, beispielsweise des Ägyptisch Blau, Han Blau und Strontiumkupfersilikat als Kalibriersubstanzen für die spektrale Korrektur von Fluoreszenzmesssystemen Vorteile gegenüber bisher verwendeten organischen Farbstoffen. Die Herstellung der beschriebenen Pigmente ist ungleich einfacher, als die aufwendige Synthese der organischen Substanzen. Damit sind die hier vorgeschlagenen NIR-Kalibriersubstanzen wesentlich billiger als, beispielsweise solche komplex aufgebauten organischen Farbstoffe wie Cyanin-Verbindungen.

Zusammenfasend wird ein spektraler Nahinfrarot-Kalibrierstandard gemäß Anspruch zur Kalibrierung einer optischen Messvorrichtung in einem Spektralbereich umfassend Nahinfrarot von 800 bis 1300 nm vorgeschlagen, wobei der Kalibrierstandard eine Verbindung gemäß der allgemeinen Formel MCuSi₄O₁₀ (I) umfasst, wobei M in der Formel (I) für Be, Mg, Ca, Sr und/oder Ba steht, der optional weiter einen organischen Farbstoff, ein Seltenerd- oder Übergangsmetallionen-dotiertes Glas, und/oder einen breitbandig emittierenden Leuchtstoff und/oder Pigment umfasst. Weiterhin wird ein Kit zur rückführbaren Kalibrierung eines Photolumineszenzmesssystems, insbesondere eines Fluoreszenzmesssystems, vorgeschlagen, welches den NIR-Kalibrierstandard gemäß Anspruch und optional zumindest einen der genannten Photolumineszenzstandards umfasst sowie deren spektral korrigierte Fluoreszenzspektren in tabellarischer Form, in computerlesbarer Form und/oder eine Angabe einer Internetseite, auf welcher das korrigierte Fluoreszenzspektrum abrufbar ist.

### Referenzen

[1] Würth, C.; Grabolle, M.; Pauli, J.; Spieles, M.; Resch-Genger, U. Anal. Chem. 2011, 83, 3431-3439.
[2] Resch-Genger, U.; DeRose, P. C. Pure Appl. Chem. 2012, 84, 1815-1835.
[3] Borisov, S. M.; Gatterer, K.; Bitschnau, B.; Klimant, I. J. Phys. Chem. C 2010, 114, 9118-9124.
[4] Accorsi, G.; Verri, G.; Bolognesi, M.; Armaroli, N.; Clementi, C.; Miliani, C.; Romani, A. Chem. Commun. 2009, 3392-3394

## Patentansprüche

1. Spektraler Nahinfrarot-Kalibrierstandard zur Kalibrierung einer optischen Messvorrichtung ausgewählt unter einem Fluoreszenzmikroskop, einem Laserscanning-Mikroskop, einem Durchflusszytometer, einer Ulbrichtkugelmessanordnung und einem Mikroplatten-Reader hinsichtlich einer spektralen Empfindlichkeit und/oder einer Fluoreszenzquantenausbeute in einem Spektralbereich umfassend Nahinfrarot von 800 bis 1300 nm, wobei der spektrale Nahinfrarot-Kalibrierstandard eine Verbindung gemäß der allgemeinen Formel
MCuSi₄O₁₀ (I)
umfasst, wobei M in der Formel I für Be, Mg, Ca, Sr oder Ba steht; und
wobei der spektrale Nahinfrarot-Kalibrierstandard ein sphärisch geformtes Feststoff-Nanopartikel oder ein sphärisch geformtes Feststoff-Mikropartikel jeweils gebildet durch die Verbindung (1) gemäß der allgemeinen Formel I und eine Matrix (2) umfasst, und die Verbindung (1) nach Formel I entweder im Inneren der Matrix (2) konzentriert vorliegt, eine geschlossene Schicht auf einer sphärischen Oberfläche der Matrix (2) bildet, oder eine geschlossene Schicht bildet, die unter der sphärischen Oberfläche des Partikels liegt,
wobei die Matrix ausgewählt ist unter: einem Polydimethylsiloxan, einem Polystyrol, einem Polymethylmethacrylat, einem Polyacrylamid, einem Polylactid, einem Polyisopren, einem Polyacrylnitril, einem Polyester, Silica, einem Silikon, und einem Sol-Gel-Netzwerk.

2. Spektraler Nahinfrarot-Kalibrierstandard nach Anspruch 1, wobei der Nahinfrarot-Kalibrierstandard durch eine Lumineszenzquantenausbeute >5% oder >10% angepasst ist, um die optische Messvorrichtung hinsichtlich einer Messung der Lumineszenzquantenausbeute zu kalibrieren.

3. Spektraler Nahinfrarot-Kalibrierstandard nach Anspruch 1 bis 2, wobei der Nahinfrarot-Kalibrierstandard angepasst ist, um die optische Messvorrichtung hinsichtlich einer relativen spektralen Empfindlichkeit im Bereich von 800 bis 1300 nm zu kalibrieren und/oder zu überprüfen.

4. Spektraler Nahinfrarot-Kalibrierstandard nach Anspruch 1, wobei die Matrix einen organischen Farbstoff aufweist, der ausgewählt ist unter: Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, Styryl-Farbstoffen, oder 1,3,4-Oxadiazolderivaten.

5. Verwendung eines Nahinfrarot-Kalibrierstandards nach einem der Ansprüche 1 bis 4, wobei der Nahinfrarot-Kalibrierstandard zur Ermittlung einer Emissions- und/oder Anregungskorrekturfunktion verwendet wird, welche gerätespezifische spektrale Beiträge eines zu kalibrierenden Photolumineszenzmesssystems enthält.

6. Verwendung nach Anspruch 5, wobei der Nahinfrarot-Kalibrierstandard in Kombination mit einem spektralen Fluoreszenzstandard verwendet wird, dessen Fluoreszenzspektrum mit dem der gewählten Verbindung gemäß Formel I zusammen einen vorbestimmbaren Spektralbereich abdeckt, der an den Nahinfrarot-Spektralbereich von 800 bis 1300 nm anschließt oder mit jenem zumindest bei etwa 800 nm bis etwa 870 nm überlappt oder zumindest bei etwa 1050 nm bis etwa 1250 nm überlappt.

7. Verwendung nach Anspruch 6, wobei der spektrale Fluoreszenzstandard ausgewählt ist unter: einem organischen Farbstoff, und/oder einem Seltenerd- oder Übergangsmetallionen-dotierten Glas, und/oder einem breitbandig emittierenden Leuchtstoff und/oder Pigment.

8. Verwendung nach Anspruch 7, wobei
der organische Farbstoff ausgewählt ist unter:
Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, Styryl-Farbstoffen, oder 1,3,4-Oxadiazolderivaten; und/oder
das Seltenerd- oder Übergangsmetallionen-dotierte Glas ausgewählt ist unter:
einem Eu(III)-Komplex, einem lumineszenten Seltenerdmetall, ausgewählt unter Scandium, Yttrium, Lanthan sowie Lanthanoiden, insbesondere Cer (Ce), Europium (Eu), Terbium (Tb), Thulium (Tm), Erbium (Er), Samarium (Sm) und Holmium (Ho), oder breitbandig emittierenden Übergangsmetallionen des Chrom (Cr), Vanadium (V), oder Mangan und ihre Verbindungen wie z.B. Oxiden; und/oder
der breitbandig emittierende Leuchtstoff und/oder das Pigment ausgewählt ist unter:
YAG:Ce und Eu(III)-Verbindungen.

9. Verwendung nach einem der Ansprüche 5 bis 8, wobei der Nahinfrarot-Kalibrierstandard in Kombination mit weiteren untereinander abgestimmten spektralen Fluoreszenzstandards eingesetzt wird, deren Fluoreszenzspektren zusammen einen vorbestimmten Spektralbereich abdecken, der an den Nahinfrarot-Spektralbereich anschließt oder mit diesem zumindest teilweise überlappt.

10. Verwendung nach einem der Ansprüche 5 bis 9, wobei der Nahinfrarot-Kalibrierstandard als Fluoreszenzquantenausbeutestandard mit einer Fluoreszenzquantenausbeute von > 5% für die Kalibrierung einer Ulbrichtkugelmessanordnung, verwendet wird.

11. Verwendung nach einem der Ansprüche 5 bis 10, wobei der Kalibrierstandard in einer flüssigen oder festen lichtstreuenden Matrix, als streuender spektraler Fluoreszenzstandard und als Fluoreszenzquantenausbeutestandard zur Bestimmung der Fluoreszenzquantenausbeute von streuenden und fluoreszierenden Partikel-Systemen oder zur Bewertung von fluoreszenzoptischen Messverfahren und Messanordnungen verwendet wird.

12. Kit zur rückführbaren Kalibrierung eines Photolumineszenzmesssystems, insbesondere eines Fluoreszenzmesssystems, umfassend:
- einen Nahinfrarot-Kalibrierstandard gemäß einem der Ansprüche 1 bis 4 sowie
- ein spektral korrigiertes Fluoreszenzspektrum des Nahinfrarot-Kalibrierstandards in tabellarischer Form, in computerlesbarer Form und/oder eine Angabe einer Internetseite, auf welcher das korrigierte Fluoreszenzspektrum abrufbar ist.

13. Kit nach Anspruch 12, ferner umfassend eine Mehrzahl weiterer Photolumineszenzstandards, umfassend zumindest:
- einen organischen Farbstoff, der ausgewählt ist unter: Biphenyl oder Biphenylderivaten, Naphtalin oder Naphtalinderivaten, Cumarinderivaten, 3H-Phenoxazin-5-onderivaten, Merocyaninderivaten, Hemicyaninderivaten, p-Terphenylen, Styryl-Farbstoffen, oder 1,3,4-Oxadiazolderivaten; und/oder
- ein Seltenerd- oder Übergangsmetallionen-dotiertes Glas, das ausgewählt ist unter einem Eu(III)-Komplex, einem lumineszenten Seltenerdmetall, ausgewählt unter: Scandium, Yttrium, Lanthan sowie Lanthanoiden, insbesondere Cer (Ce), Europium (Eu), Terbium (Tb), Thulium (Tm), Erbium (Er), Samarium (Sm) und Holmium (Ho); und/oder
- einen breitbandig emittierenden Leuchtstoff und/oder Pigment, ausgewählt unter: YAG:Ce und Eu(III)-Verbindungen.

## Claims

1. A spectral near infrared calibration standard for calibrating an optical measuring device, selected from a fluorescence microscope, a laser scanning microscope, a flow cytometer, an integrating sphere measuring system and a microplate reader, with respect to a spectral sensitivity and/or a fluorescence quantum yield in a spectral region including near infrared from 800 to 1300 nm, the spectral near infrared calibration standard comprising a compound according to general formula
MCuSi₄O₁₀ (I)
M, in formula I, denoting Be, Mg, Ca, Sr or Ba; and
the spectral near infrared calibration standard comprising a spherically shaped solid nanoparticle or a spherically shaped solid microparticle, each formed by the compound (1) according to general formula I and a matrix (2), and the compound (1) according to formula I either being present in concentrated form inside the matrix (2), forming a closed layer on a spherical surface of the matrix (2), or forming a closed layer located beneath the spherical surface of the particle, and
the matrix being selected from: a polydimethylsiloxane, a polystyrene, a polymethyl methacrylate, a polyacrylamide, a polylactide, a polyisoprene, a polyacrylonitrile, a polyester, silica, a silicone, and a sol-gel network.

2. The spectral near infrared calibration standard according to claim 1, wherein the near infrared calibration standard is adapted by a luminescence quantum yield of > 5% or > 10% to calibrate the optical measuring device with respect to a measurement of the luminescence quantum yield.

3. The spectral near infrared calibration standard according to claims 1 to 2,
wherein the near infrared calibration standard is adapted to calibrate and/or check the optical measuring device with respect to a relative spectral sensitivity in the range of 800 to 1300 nm.

4. The spectral near infrared calibration standard according to claim 1, wherein the matrix comprises an organic dye, which is selected from: biphenyl or biphenyl derivatives, naphthalene or naphthalene derivatives, coumarin derivatives, 3H-phenoxazin-5-on derivatives, merocyanine derivatives, hemicyanine derivatives, p-terphenylene, styryl dyes, or 1,3,4-oxadiazole derivatives.

5. Use of a near infrared calibration standard according to any one of claims 1 to 4, wherein the near infrared calibration standard is used for determining an emission and/or excitation correction function, which contains device-specific spectral contributions of a photoluminescence measuring system to be calibrated.

6. Use according to claim 5, wherein the near infrared calibration standard is used in combination with a spectral fluorescence standard, the fluorescence spectrum of which, together with the selected compound according to formula I, covers a predetermined spectral region that adjoins the near infrared spectral region of 800 to 1300 nm, or at least overlaps the same at approximately 800 nm to approximately 870 nm, or at least overlaps the same at approximately 1050 nm to approximately 1250 nm.

7. Use according to claim 6, wherein the spectral fluorescence standard is selected from: an organic dye, and/or a rare earth metal ion-doped or a transition metal ion-doped glass, and/or a luminophore having broadband emission and/or a pigment.

8. Use according to claim 7, wherein
the organic dye is selected from:
biphenyl or biphenyl derivatives, naphthalene or naphthalene derivatives, coumarin derivatives, 3H-phenoxazin-5-on derivatives, merocyanine derivatives, hemicyanine derivatives, p-terphenylene, styryl dyes, or 1,3,4-oxadiazole derivatives; and/or
the rare earth metal ion-doped or transition metal ion-doped glass is selected from: an Eu(III) complex, a luminescent rare earth metal selected from scandium, yttrium, lanthanum and lanthanoids, in particular cerium (Ce), europium (Eu), terbium (Tb), thulium (Tm), erbium (Er), samarium (Sm) and holmium (Ho), or transition metal ions of chromium (Cr), vanadium (V), or manganese having broadband emission, and the compounds thereof, such as oxides; and/or
the luminophore having broadband emission and/or the pigment is selected from: YAG:Ce and Eu(III) compounds.

9. Use according to any one of claims 5 to 8, wherein the near infrared calibration standard is used in combination with further spectral fluorescence standards matched among one another, the fluorescence spectra of which together cover a predetermined spectral region, which adjoins the near infrared spectral region or at least partially overlaps the same.

10. Use according to any one of claims 5 to 9, wherein the near infrared calibration standard is used as a fluorescence quantum yield standard having a fluorescence quantum yield of > 5% for the calibration of an integrating sphere measuring system.

11. Use according to any one of claims 5 to 10, wherein the calibration standard is used in a liquid or solid light-scattering matrix, as a scattering spectral fluorescence standard, and as a fluorescence quantum yield standard for determining the fluorescence quantum yield of scattering and fluorescent particle systems, or for evaluating fluorescence-optical measuring methods and measuring setups.

12. A kit for the traceable calibration of a photoluminescence system, in particular a fluorescence measuring system, comprising:
- a near infrared calibration standard according to any one of claims 1 to 4; and
- a spectrally corrected fluorescence spectrum of the near infrared calibration standard in tabular form, in computer-readable form and/or a specification of a website on which the corrected fluorescence spectrum can be retrieved.

13. The kit according to claim 12, further comprising a plurality of further photoluminescence standards, comprising at least:
- an organic dye, which is selected from: biphenyl or biphenyl derivatives, naphthalene or naphthalene derivatives, coumarin derivatives, 3H-phenoxazin-5-on derivatives, merocyanine derivatives, hemicyanine derivatives, p-terphenylene, styryl dyes, or 1,3,4-oxadiazole derivatives; and/or
- a rare earth metal ion-doped or transition metal ion-doped glass is selected from: an Eu(III) complex, a luminescent rare earth metal selected from scandium, yttrium, lanthanum and lanthanoids, in particular cerium (Ce), europium (Eu), terbium (Tb), thulium (Tm), erbium (Er), samarium (Sm) and holmium (Ho), and/or
- a luminophore having broadband emission and/or pigment selected from: YAG:Ce and Eu(III) compounds.

## Revendications

1. Etalon de calibrage spectral proche infrarouge pour étalonner un dispositif de mesure optique choisi parmi un microscope à fluorescence, un microscope à balayage laser, un cytomètre en flux, un dispositif de mesure à sphère d'intégration et un lecteur de microplaques, concernant une sensibilité spectrale et/ou un rendement quantique de fluorescence dans un domaine spectral comprenant l'infrarouge proche de 800 à 1300 nm, l'étalon de calibrage spectral proche infrarouge comprenant un composé de formule générale
MCuSi₄O₁₀ (I)
formule I dans laquelle M représente Be, Mg, Ca, Sr ou Ba ; et
l'étalon de calibrage spectral proche infrarouge comprenant une nanoparticule solide de forme sphérique ou une microparticule solide de forme sphérique, chacune formée par le composé (1) de formule générale I, ainsi qu'une matrice (2), et le composé (1) de formule I étant présent concentré à l'intérieur de la matrice (2), formant une couche fermée sur une surface sphérique de la matrice (2), ou formant une couche fermée qui se trouve sous la surface sphérique de la particule,
la matrice étant choisie parmi un polydiméthylsiloxane, un polystyrène, un polyméthacrylate de méthyle, un polyacrylamide, un polylactide, un polyisoprène, un polyacrylonitrile, un polyester, une silice, une silicone et un réseau sol-gel.

2. Etalon de calibrage spectral proche infrarouge selon la revendication 1, l'étalon de calibrage proche infrarouge étant, grâce à un rendement quantique de luminescence > 5 % ou > 10 %, adaptée pour étalonner un dispositif de mesure optique concernant une mesure du rendement quantique de luminescence.

3. Etalon de calibrage spectral proche infrarouge selon la revendication 1 ou 2, l'étalon de calibrage proche infrarouge étant adapté pour étalonner et/ou vérifier le dispositif optique concernant une sensibilité spectrale relative dans la plage de 800 à 1300 nm.

4. Etalon de calibrage spectral proche infrarouge selon la revendication 1, la matrice comprenant un colorant organique choisi parmi un biphényle ou des dérivés du biphényle, un naphtalène ou des dérivés du naphtalène, des dérivés de la coumarine, des dérivés de la 3H-phénoxazin-5-one, des dérivés de la mérocyanine, des dérivés de l'hémicyanine, un p-terphénylène, des colorants styryliques ou des dérivés du 1,3,4-oxadiazole.

5. Utilisation d'un étalon de calibrage proche infrarouge selon l'une quelconque des revendications 1 à 4, l'étalon de calibrage proche infrarouge étant utilisé pour déterminer une fonction de correction d'émission et/ou d'excitation contenant des contributions spectrales spécifiques au dispositif d'un système de mesure de photoluminescence à étalonner.

6. Utilisation selon la revendication 5, l'étalon de calibrage proche infrarouge étant utilisé en combinaison avec un étalon de fluorescence spectrale dont le spectre de fluorescence, conjointement à celui du composé choisi selon la formule I, couvre un domaine spectral pré déterminable, qui est adjacent au domaine spectral proche infrarouge de 800 à 1300 nm, ou recouvre au moins d'environ 800 nm à environ 870 nm ou au moins d'environ 1050 nm à environ 1250 nm.

7. Utilisation selon la revendication 6, l'étalon de fluorescence spectrale étant choisi parmi un colorant organique et/ou un verre dopé par des ions de terre rare ou de métaux de transition, et/ou un luminophore à émission large bande et/ou un pigment.

8. Utilisation selon la revendication 7, dans laquelle
le colorant organique est choisi parmi :
un biphényle ou des dérivés du biphényle, un naphtalène ou des dérivés du naphtalène, des dérivés de la coumarine, des dérivés de la 3H-phénoxazin-5-one, des dérivés de la mérocyanine, des dérivés de l'hémicyanine, un p-terphénylène, des colorants styryliques ou des dérivés du 1,3,4-oxadiazole ; et/ou
le verre dopé par des ions de terre rare ou de métaux de transition est choisi parmi :
un complexe de Eu(III), un métal de terre rare luminescent choisi parmi le scandium, l'yttrium, le lanthane, ainsi que les lanthanides, en particulier le cérium (Ce), l'europium (Eu), le terbium (Tb), le thulium (Tm), l'erbium (Er), le samarium (Sm) et le holmium (Ho), ou des ions de métaux de transition émetteurs à large bande du chrome (Cr), du vanadium (V) ou du manganèse et leurs composés tels que les oxydes ; et/ou
le luminophore à émission large bande et/ou le pigment sont choisis parmi les composés YAG : Ce et Eu(III).

9. Utilisation selon l'une des revendications 5 à 8, l'étalon de calibrage proche infrarouge étant utilisé en combinaison d'autres étalons de fluorescence spectrale mutuellement appariés dont les spectres de fluorescence couvrent ensemble un domaine spectral prédéterminé adjacent ou recouvrant au moins partiellement le domaine spectral proche infrarouge.

10. Utilisation selon l'une des revendications 5 à 9, l'étalon de calibrage proche infrarouge étant utilisé comme étalon de rendement quantique de fluorescence avec un rendement quantique de fluorescence > 5 % pour l'étalonnage d'un dispositif de mesure à sphère d'intégration.

11. Utilisation selon l'une des revendications 5 à 10, l'étalon de calibrage étant utilisé dans une matrice liquide ou solide à diffusion de la lumière, comme étalon de fluorescence spectrale diffusante et comme étalon de rendement quantique de fluorescence pour la détermination du rendement quantique de fluorescence de systèmes de particules diffusantes et fluorescentes ou pour évaluer des procédés et des dispositifs de mesure optique en fluorescence.

12. Kit pour étalonnage traçable d'un système de mesure de photoluminescence, en particulier d'un système de mesure de fluorescence, comprenant :
- un étalon de calibrage proche infrarouge selon l'une des revendications 1 à 4, ainsi que
- un spectre de fluorescence à correction spectrale de l'étalon de calibrage proche infrarouge sous la forme d'un tableau, sous forme lisible par un ordinateur et/ou une indication d'une page Internet sur laquelle le spectre de fluorescence corrigé est disponible.

13. Kit selon la revendication 12, comprenant en outre une pluralité d'autres étalons de photoluminescence, comprenant au moins
- un colorant organique choisi parmi : un biphényle ou des dérivés du biphényle, un naphtalène ou des dérivés du naphtalène, des dérivés de la coumarine, des dérivés de la 3H-phénoxazin-5-one, des dérivés de la mérocyanine, des dérivés de l'hémicyanine, un p-terphénylène, des colorants styryliques ou des dérivés du 1,3,4-oxadiazole ; et/ou
- un verre dopé par des ions de terre rare ou de métaux de transition, choisi parmi un complexe de Eu(III), un métal de terre rare luminescent choisi parmi le scandium, l'yttrium, le lanthane, ainsi que les lanthanides, en particulier le cérium (Ce), l'europium (Eu), le terbium (Tb), le thulium (Tm), l'erbium (Er), le samarium (Sm) et l'holmium (Ho) ; et/ou
- un luminophore à émission large bande et/ou un pigment, choisi parmi les composés YAG : Ce et Eu(III).
